# EUROPÄISCHE PATENTANMELDUNG

(11) **EP 1 605 612 A2**
(43) Veröffentlichungstag der Anmeldung: **14.12.2005**
(21) Anmeldenummer: 05103930.3
(22) Anmeldetag: 11.05.2005
(51) Int. Cl.: H04B 10/08

(54) **Verfahren zur Überwachung einer Datenübertragungsstrecke**

(30) Priorität: 12.05.2004 DE 102004023476
(71) Anmelder: SIEMENS AKTIENGESELLSCHAFT, 80333 München (DE)
(72) Erfinder: Munz, Dieter, 91315, Höchstadt (DE); Schimmer, Jürgen, 90473, Nürnberg (DE); Schmidt, Richard, 91083, Baiersdorf (DE)

(57) **Zusammenfassung**

Die Erfindung betrifft ein Verfahren zur Überwachung einer Datenübertragungsstrecke, insbesondere einer optischen Datenübertragungsstrecke (6) in einem Kommunikationssystem (12). Darüber hinaus betrifft die Erfindung ein Kommunikationssystem (12) sowie Systemeinheiten (11, 13, 15, 18) eines solches Kommunikationssystems (12). Um die Überwachung einer Datenübertragungsstrecke (6) zu verbessern, wird vorgeschlagen, neben einem Betriebssignal und einem Ausfallsignal ein zusätzliches drittes Signal in Form eines Frühwarnsignals bereitzustellen, welches über die gleiche normierte Signalleitung (10) übertragen wird, wie die bereits aus dem Stand der Technik bekannten Betriebs- bzw. Ausfallsignale.

## Beschreibung

Die Erfindung betrifft ein Verfahren zur Überwachung einer Datenübertragungsstrecke, insbesondere einer optischen Datenübertragungsstrecke in einem Kommunikationssystem. Darüber hinaus betrifft die Erfindung ein Kommunikationssystem sowie Systemeinheiten eines solches Kommunikationssystems.

Optische Datenübertragungssysteme, zum Beispiel Fast Ethernet, sind aus dem Stand der Technik bekannt. Für die Übertragungsstrecke werden zumeist Lichtwellenleiter verwendet. Zur Fehlerdiagnose der Übertragungsstrecke wird eine normierte Signalleitung "signal detect" verwendet. Über diese Signalleitung wird im Normalbetrieb ein digitales L-Signal übertragen. Ist die Verbindung gestört, erfolgt die Übertragung eines digitalen H-Signals.

Aufgabe der vorliegenden Erfindung ist es, die Überwachung einer Datenübertragungsstrecke, insbesondere einer optischen Datenübertragungsstrecke in einem Kommunikationssystem, zu verbessern.

Diese Aufgabe wird durch ein Verfahren nach Anspruch 1 bzw. die Gegenstände der weiteren unabhängigen Patentansprüche gelöst.

Ein Kerngedanke der Erfindung besteht dabei darin, neben einem Betriebssignal und einem Ausfallsignal ein zusätzliches drittes Signal in Form eines Frühwarnsignals bereitzustellen, welches über die gleiche normierte Signalleitung übertragen wird, wie die bereits aus dem Stand der Technik bekannten Betriebs- bzw. Ausfallsignale. Hierdurch wird erreicht, dass bisher verwendete Hardware-Komponenten im Kommunikationssystem weiter verwendet werden können. Insbesondere muss die standardisierte Anschlussbelegung der Transceiver-Module nicht geändert werden. Mit anderen Worten kommt die erfindungsgemäße Lösung ohne eine zusätzliche Signalleitung bzw. einen zusätzlichen Anschlusspin aus.

Das Frühwarnsignal wird bei Erreichen eines bestimmten, die Datenübertragung kennzeichnenden Parameterwertes ausgegeben. Dabei handelt es sich insbesondere um einen Qualitätsparameter, welcher die Übertragungsqualität der Datenübertragungsstrecke kennzeichnet. Dies spielt insbesondere bei Lichtwellenleitern eine Rolle, da dort aufgrund von Materialalterung die Übertragungsqualität erheblich gemindert werden kann. Durch ein frühzeitiges Erkennen einer möglichen Beeinflussung der Datenübertragung kann ein Totalausfall, beispielsweise durch frühzeitigen Austausch der betroffenen Systemhardware, vermieden werden.

Anzahl und Funktion der Signalleitungen bzw. der Anschlusspins der Schaltkreise bleiben erfindungsgemäß unverändert. Zugleich entspricht das Verhalten bei der Zusammenschaltung erfindungsgemäßer Systemkomponenten mit konventionellen Systemschaltkreisen dem ursprünglichen Systemverhalten, so dass eine Aufrüstung bestehender Systeme problemlos möglich ist. Selbstverständlich können jedoch nur solche Schaltkreise, welche eine entsprechende, für das Erkennen bzw. die Auswertung des zusätzlichen Signals erforderliche funktionale Erweiterung aufweisen, das Zusatzmerkmal der Frühwarnung ausnutzen.

Das erfindungsgemäße Prinzip ist nicht auf ein optisches Datenübertragungssystem beschränkt. Vielmehr kann es auch auf andere Systeme übertragen werden, bei denen Signale zeitlich nacheinander über einen einzelnen Anschluss bzw. eine einzige Leitung ausgegeben werden.

Aufgrund dieser frühzeitigen Erkennung möglicher Fehler ergibt sich eine wesentliche Verbesserung der Überwachung der Datenübertragungsstrecke, was insbesondere für industrielle oder sicherheitskritische Anwendungen hochrelevant ist. Insbesondere ergibt sich in diesem Zusammenhang die Möglichkeit einer vorbeugenden Wartung der Übertragungsstrecke innerhalb der Alterungsreserve der Lichtwellenleiter-Faser.

Vorteilhafte Ausführungsformen der Erfindung sind in den Unteransprüchen angegeben.

Zweckmäßigerweise wird eine Weiterverwendbarkeit bereits vorhandener Systemhardware und damit eine Systemkompatibilität dadurch erzielt, dass die bisher üblichen Logik-Pegel für Betriebssignal und Ausfallsignal beibehalten werden. Der Pegel des Frühwarnsignals wird so gelegt, dass er unterhalb des für das Ausfallsignal verwendeten Pegelbereiches liegt. Somit erfolgt die Frühwarnung stets vor der Ausfallwarnung, so dass keine Konflikte bei den Signalpegeln auftreten. Dies hat den Vorteil, dass auch konventionelle Systeme, die nur das "signal detect" auswerten, weiterhin ohne Einschränkungen funktionieren, so dass eine hohe Kompatibilität erzielt wird.

Die vorliegende Erfindung wird nachfolgend anhand von Ausführungsbeispielen näher beschrieben, die mit Hilfe der Zeichnungen erläutert werden. Hierbei zeigen:
- FIG 1: ein Pegeldiagramm zur Veranschaulichung der für die verschiedenen Signale verwendeten Logik-Pegel,
- FIG 2: eine schematische Darstellung eines Kommunikationssystems nach dem Stand der Technik,
- FIG 3: eine schematische Darstellung einer ersten Ausführungsform des erfindungsgemäßen Kommunikationssystems,
- FIG 4: eine schematische Darstellung einer zweiten Ausführungsform des erfindungsgemäßen Kommunikationssystems,
- FIG 5: eine schematische Darstellung einer dritten Ausführungsform des erfindungsgemäßen Kommunikationssystems,
- FIG 6: ein vereinfachtes Schaltbild einer Ausführungsform des erfindungsgemäßen Kommunikationssystems,
- FIG 7: ein Pegelschema für die Ausführungsform nach FIG 6,
- FIG 8: ein Schaltbild einer weiteren Ausführungsform des erfindungsgemäßen Kommunikationssystems.

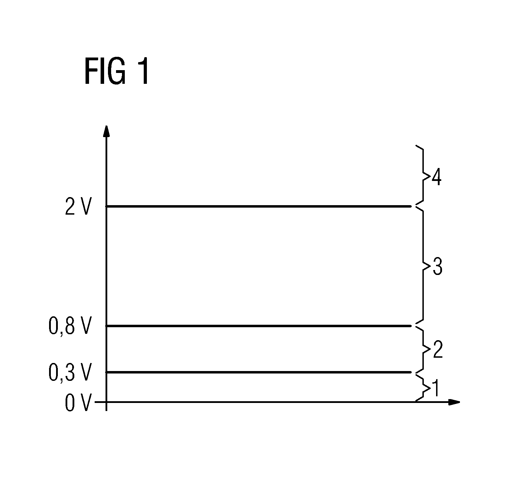

Die Einbettung eines Frühwarnsignals in die Logik-Pegel erfolgt bei Transistor-Transistor-Logik (TTL)-kompatiblen Systemen vorzugsweise nach dem in FIG 1 dargestellten Pegeldiagramm. Danach ist einem Pegelbereich von 0 Volt bis 0,8 Volt der Normalbetrieb der Datenübertragungsstrecke zugeordnet. Innerhalb des Normalpegelbereiches liegt sowohl der Pegelbereich 1 für ein spezielles "Normal"-L-Signal (0 Volt bis 0,3 Volt), an welchen sich der Pegelbereich 2 für das Frühwarnsignal (0,3 Volt bis 0,8 Volt) anschließt. In diesem Frühwarnbereich erfolgt mit anderen Worten ein Betrieb der Datenübertragungsstrecke in Alterungsreserve. Der Pegelbereich 3 von 0,8 Volt bis 2 Volt bleibt, wie aus dem Stand der Technik bekannt, undefiniert. An diesen undefinierten Bereich 3 schließt sich ein Pegelbereich 4 für ein digitales H-Signal als Ausfallsignal an (≥ 2 Volt), welches einen Ausfall der Datenübertragung kennzeichnet.

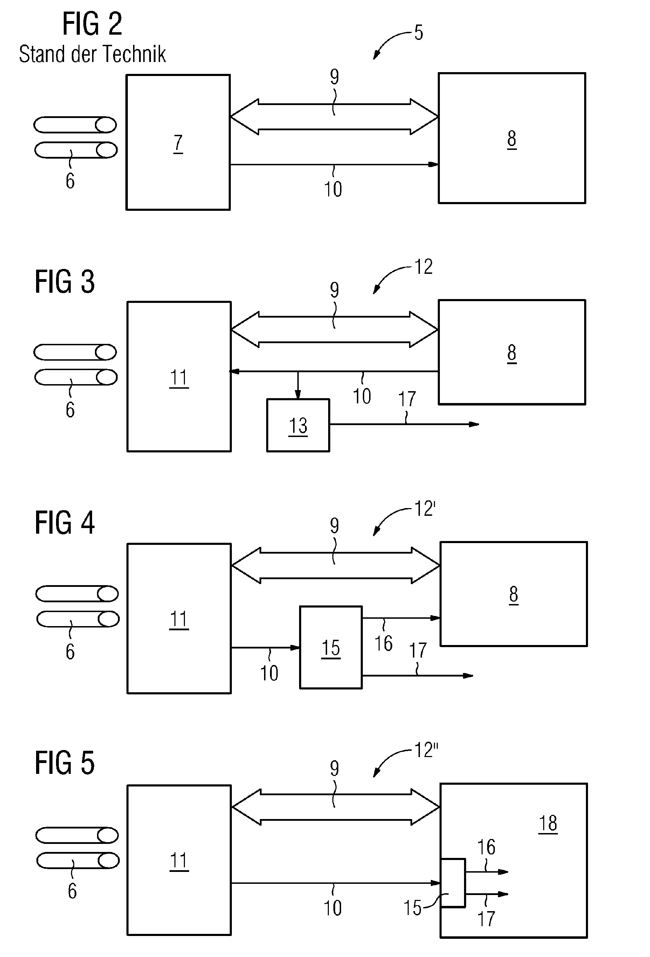

In FIG 2 ist ein Teil eines aus dem Stand der Technik bekannten Kommunikationssystems 5 abgebildet. Die Kommunikation erfolgt zwischen einem an eine optische Übertragungsstrecke 6 angeschlossenen Transceiver 7 und einem Kommunikationsschaltkreis 8 über spezielle Kommunikationsleitungen 9. Der Kommunikationsschaltkreis dient dabei zum Senden und Empfangen der Daten. Parallel zu diesen Kommunikationsleitungen 9 wird eine normierte Signalleitung 10 ("signal detect") genutzt, um ein Betriebs- bzw. Ausfallsignal vom Transceiver 7 zum Kommunikationsschaltkreis 8 zu übermitteln.

Wird nun anstelle des bekannten Transceivers 7 ein Transceiver 11 verwendet, welcher über eine entsprechende Diagnosefunktion verfügt, so kann über die normierte Signalleitung 10 unter Verwendung der in FIG 1 skizzierten Signalpegel ein Frühwarnsignal ausgegeben werden, sobald die entsprechenden Parameterwerte erreicht sind. Ein solches Kommunikationssystem 12 wird in FIG 3 gezeigt, wobei auf der Gegenseite ein herkömmlicher Kommunikationsschaltkreis 8 zum Einsatz kommt. Es findet eine zwischen Transceiver 11 und Kommunikationsschaltkreis 8 angeordnete Decoder-Schaltung 13 Verwendung, welche die Signalleitung 10 beobachtet und bei einem entsprechenden Signalpegel ein Frühwarnsignal an eine entsprechende Auswerteeinheit (nicht abgebildet), beispielsweise eine Wartungs- bzw. Bedienkonsole, weitergibt.

In einer weiteren in FIG 4 illustrierten Ausführungsform der Erfindung ist ein Kommunikationssystem 12' verbindet die normierte Signalleitung 10 den Transceiver 11 mit einem Signalsplitter 15, welcher das Signal in das standardisierte Ausfallsignal 16 und das Frühwarnsignal 17 aufsplittet. Das Ausfallsignal 16 wird anschließend, wie aus FIG 3 bekannt, an den Kommunikationsschaltkreis 8 weitergeleitet, während die Weitergabe des Frühwarnsignals 17 an die Auswerteeinheit erfolgt. Der Signalsplitter 15 beinhaltet dabei die bereits aus FIG 3 bekannte Decoderschaltung 13.

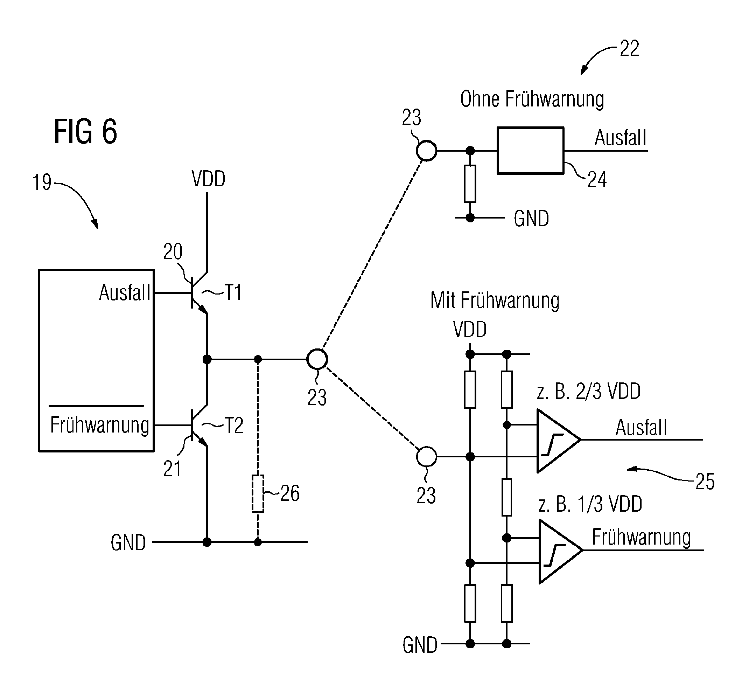

Während in den FIG 3 und 4 ein Mischbetrieb mit neuen Transceivern 11 und herkömmlichen Kommunikationsschaltkreisen 8 beschrieben wurde, ist selbstverständlich auch eine Ausführungsform, wie sie in FIG 5 dargestellt, möglich. Bei diesem Kommunikationssystem 12" ist ein mit der entsprechenden Diagnosefunktion ausgestatteter Transceiver 11 mit einem neuartigen Kommunikationsschaltkreis 18 verbunden, der den bereits aus FIG 4 bekannten Signalsplitter 15 mit umfasst. Das Decodieren des Frühwarnsignals erfolgt mit anderen Worten durch eine spezielle Eingangsschaltung des nachgeschalteten Kommunikationsschaltkreises 18, wobei die Auswertung des Frühwarnsignals dann ebenfalls in dem Kommunikationsschaltkreis 18 erfolgt.

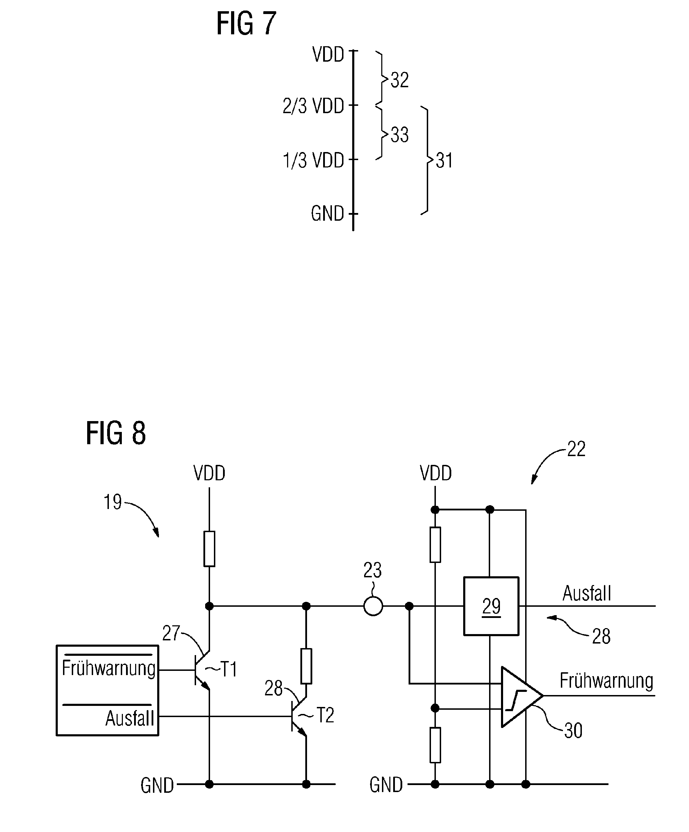

Die schaltungstechnische Erzeugung des Frühwarnsignals erfolgt beispielsweise durch Veränderung der Impedanz des treibenden Signals (vgl. FIG 6) oder durch fest eingestellte mehrstufige Signalpegel (vgl. FIG 8).

Wie in FIG 6 dargestellt, sind dabei auf Transceiver-Seite 19 zwei Transistoren 20, 21 sowie ein Widerstand 26 vorgesehen, wobei der erste Transistor T1 zur Verwirklichung der Normalbetrieb/Ausfall-Funktion und der zweite Transistor T2 der Frühwarnfunktion zugeordnet ist. Auf der Kommunikationsschaltkreis-Seite 22 ist eine Auswerteschaltung vorgesehen.

Bei der in FIG 6 dargestellten Schaltung sind die drei Zustände Fehlerfall, Gutfall und Vorwarnfall möglich. Im Fehlerfall leitet der Transistor 20 (T1), während der Transistor 21 (T2) sperrt. Die Spannung am Diagnosepin 23 beträgt VDD. Im Gutfall sperrt der Transistor 20 (T1), während der Transistor 21 (T2) leitet. Die Spannung am Diagnosepin 23 beträgt GND (0V). Im Vorwarnfall sperren beide Transistoren 20, 21 (T1, T2). Die Spannung am Diagnosepin 23 wird durch die Beschaltung des Diagnosepins 23 vorgegeben.

Bei einem Einsatz des Transceivers 11 in einem aus dem Stand der Technik bekannten, nicht mit Diagnosefähigkeiten ausgestatteten System wird die Spannung mittels Pull-Down-Widerstand auf GND gezogen - der Vorwarnfall erscheint der nachfolgenden Auswerteschaltung als Gutfall. Dieser Fall ist in FIG 6 in der oberen Abbildung auf der Kommunikationsschaltkreis-Seite 22 abgebildet, wobei die dortige Auswerteschaltung ein digitales Gatter 24 umfasst.

Bei Einsatz des Transceivers 11 in einer neuartigen, mit Diagnosefähigkeiten ausgestatteten Schaltung wird der Diagnosepin 23 resistiv auf eine Spannung zwischen VDD und GND gezogen. Die Aufspaltung in ein Vorwarnsignal und ein Ausfallsignal geschieht durch die Schaltschwellen der nachfolgenden Auswerteschaltung 25. Dieser Fall ist in FIG 6 in der unteren Abbildung auf der Kommunikationsschaltkreis-Seite 22 abgebildet.

Der Spannungspegel für das Vorwarnsignal kann entsprechend der Erfordernisse frei gewählt werden. So kann z.B. der Pegel 1/2 VDD für maximalen Störabstand, oder ein zu bestehenden Digitaleingängen kompatibler Pegel gewählt werden.

FIG 7 illustriert die Pegelbereiche für eine Schaltung nach FIG 6. Danach ist ein den Normalbetrieb anzeigender Pegelbereich 31 zwischen GND und 2/3 VDD vorgesehen, an den sich ein "Ausfall"-Pegelbereich 32 zwischen 2/3 VDD und VDD anschließt. Der Normalbereich 31 umfasst dabei einen Pegelbereich 33 für das Frühwarnsignal zwischen 1/3 VDD und 2/3 VDD.

In der in FIG 8 dargestellten Ausführungsform der Erfindung sind beide auf Transceiver-Seite 19 vorgesehenen Transistoren 27, 28 (T1, T2) im Normalbetrieb durchgeschaltet. Am Diagnose-23 Pin wird dann eine Spannung < 0,3 Volt ausgegeben. Die Ausgangssignale der Auswerteschaltung 28 (digitales Gatter, Komparator) weisen beide L-Werte auf.

Wird das Frühwarnsignal ausgegeben, sperrt der Transistor 27 (T1). Die Spannung am Diagnose-Pin 23 liegt dann zwischen 0,3 Volt und 0,8 Volt (Spannungsteiler-Prinzip). Das digitale Gatter 29 (Ausfall) gibt weiterhin ein L-Signal aus, während das Ausgangssignal (Frühwarnung) des Komparators 30 auf einen H-Wert schaltet.

Zur Ausgabe des Ausfallsignals sind beide Transistoren 27, 28 (T1, T2) gesperrt. Am Diagnose-Pin 23 wird eine Spannung ≥ 2 Volt ausgegeben, dies entspricht einem logischen H-Pegel. Die Ausgangssignale der Auswerteschaltung (digitales Gatter 29, Komparator 30) weisen beide H-Werte auf.

## Patentansprüche

1. Verfahren zur Überwachung einer Datenübertragungsstrecke, insbesondere einer optischen Datenübertragungsstrecke (6) in einem Kommunikationssystem (12), bei welchem im Normalbetrieb ein Betriebssignal und/oder bei einem Ausfall der Datenübertragung ein Ausfallsignal über eine normierte Signalleitung (10) ausgegeben wird und bei Erreichen eines bestimmten, die Datenübertragung kennzeichnenden Parameterwertes über die gleiche Signalleitung (10) ein Frühwarnsignal ausgegeben wird.

2. Verfahren nach Anspruch 1, **gekennzeichnet durch** das Beibehalten üblicher Logik-Pegel für Betriebssignal und Ausfallsignal.

3. Verfahren nach Anspruch 1 oder 2, **dadurch gekennzeichnet , dass** das Ausgeben des Frühwarnsignals mit einem Signalpegel (2) erfolgt, der unterhalb des für das Ausfallsignal verwendeten Pegelbereiches (4) liegt.

4. Verfahren nach einem der Ansprüche 1 bis 3, **dadurch gekennzeichnet , dass** das Ausgeben des Frühwarnsignals mit einem Signalpegel (2) erfolgt, der innerhalb des bisher für das Betriebssignal verwendeten Pegelbereiches liegt.

5. Verfahren nach einem der Ansprüche 1 bis 4, **gekennzeichnet durch** ein Erzeugen des Frühwarnsignals **durch** eine Systemeinheit (11) mit Diagnose- und Sendefunktion.

6. Verfahren nach einem der Ansprüche 1 bis 5, **gekennzeichnet durch** ein Auswerten des Frühwarnsignals **durch** eine Systemeinheit (18) mit Empfangs- und Decodierfunktion.

7. Kommunikationssystem (12) mit einer Datenübertragungsstrecke (6), mit einer Systemeinheit (11) zum Ausgeben eines Betriebssignals bei Normalbetrieb und/oder eines Ausfallsignals bei einem Ausfall der Datenübertragung über eine normierte Signalleitung (10) und zum Ausgeben eines Frühwarnsignals über die gleiche Signalleitung (10) bei Erreichen eines bestimmen, die Datenübertragung kennzeichnenden Parameterwertes.

8. Systemeinheit (11) für ein Kommunikationssystem (12) mit einer Datenübertragungsstrecke (6), ausgebildet zum Erzeugen und Senden eines Betriebssignals bei Normalbetrieb und/oder eines Ausfallsignals bei Ausfall der Datenübertragung über eine normierte Signalleitung (10) und zum Erzeugen und Senden eines Frühwarnsignals über die gleiche Signalleitung (10) bei Erreichen eines bestimmten, die Datenübertragung kennzeichnenden Parameterwertes.

9. Systemeinheit (13, 15, 18) für ein Kommunikationssystem (12) mit einer Datenübertragungsstrecke (6), ausgebildet zum Empfang eines Zustandssignals für die Datenübertragungsstrecke (6) über eine normierte Signalleitung (10) und zum Decodieren des Zustandssignals zur Ermittlung eines Betriebssignals bei Normalbetrieb und/oder eines Ausfallsignals bei Ausfall der Datenübertragung bzw. eines Frühwarnsignals bei Erreichen eines bestimmten, die Datenübertragung kennzeichnenden Parameterwertes.

10. Computerprogramm zur Überwachung einer Datenübertragungsstrecke, insbesondere einer optischen Datenübertragungsstrecke (6) in einem Kommunikationssystem (12)
- mit Computerprogrammbefehlen zum Ausgeben eines Betriebssignals im Normalbetrieb und/oder eines Ausfallsignals bei einem Ausfall der Datenübertragung über eine normierte Signalleitung (10) und
- mit Computerprogrammbefehlen zum Ausgeben eines Frühwarnsignals über die gleiche Signalleitung (10) bei Erreichen eines bestimmten, die Datenübertragung kennzeichnenden Parameterwertes,
wenn das Computerprogramm auf einem Rechner (11) ausgeführt wird.
